Europäisches Patentamt

(19) European Patent Office

Office européen des brevets

(11) Publication number: **0 240 258**
**B1**

(12) **EUROPEAN PATENT SPECIFICATION**

(45) Date of publication of the patent specification:
16.05.90

(21) Application number: 87302652.0

(22) Date of filing: 27.03.87

(51) Int. Cl.⁵: **B01J 13/02**, B41M 5/124

(54) A process for manufacturing microcapsules.

(30) Priority: 31.03.86 US 846420

(43) Date of publication of application:
07.10.87 Bulletin 87/41

(45) Publication of the grant of the patent:
16.05.90 Bulletin 90/20

(84) Designated Contracting States:
AT BE CH DE ES FR GB IT LI NL SE

(56) References cited:
EP-A- 0 133 352
DE-A- 2 832 637
FR-A- 2 416 727
GB-A- 2 177 997

(73) Proprietor: APPLETON PAPERS INC., P.O.
Box 359 825 East Wisconsin Avenue, Appleton
Wisconsin 54912(US)

(72) Inventor: Bowman, Richard P., 1614 E. Harding Drive,
Appleton Wisconsin 54915(US)

(74) Representative: Norris, Richard John et al, The Wiggins
Teape Group Limited Group Patents Departement
Butler's Court, Beaconsfield Buckinghamshire
HP9 1RT(GB)

## Description

The present invention relates to a process for manufacturing microcapsules having walls of urea- or melamine-formaldehyde polymeric materials.

The most widespread use of microcapsules to date has been in certain kinds of pressure-sensitive copying systems. One such system, disclosed in U.S. Patent No. 2,730,456 and commonly known as transfer or manifold record material comprises an upper sheet and a lower sheet. The upper sheet is coated on its lower surface with a layer comprising microcapsules, containing a solution of colourless chromogenic material, and the layer usually further contains protective stilt material and binder material. The stilt material is preferably uncooked starch particles as disclosed in UK Patent No. 1,252,858. The upper sheet is hereinafter referred to as a coated back or CB sheet. The lower sheet of the manifold record material is coated on its upper surface with a colour developing coreactant material, e.g. an acidic clay, a phenolic resin or certain organic salts (hereinafter referred to as a coated front or CF sheet). For applications which require more than two plies in the record material, a number of intermediate sheets are also provided, each of which is coated on its lower surface with microcapsules and on its upper surface with acidic, colour-developing material. Pressure exerted on the sheets by writing or typing ruptures the microcapsules, thereby releasing the chromogenic material solution on to the coreactant material on the next lower sheet and giving rise to a chemical reaction which develops the colour of the chromogenic material.

In another system, known as a self-contained system and disclosed in U.S. Patents Nos. 2,730,457 and 4,197,346, microcapsules containing a chromogenic material solution and a coreactant material are coated on the same surface of a sheet of paper. Pressure exerted on the sheet by writing or typing causes the capsules to rupture and release the chromogenic material, which then reacts with the coreactant material on the sheet to produce a colour.

Microcapsules for use in the above-described pressure sensitive copying systems have a series of stringent property requirements so as to produce an optimum copying system. Some of these properties are capsule strength, controlled size distribution range and wall integrity (impermeability).

Numerous processes for manufacturing microcapsules have been proposed, many of them using materials which give rise to microcapsules having walls of urea- or melamine-formaldehyde polymeric walls. For example, a method of encapsulation by in situ polymerization, including a reaction between urea and formaldehyde or polycondensation of monomeric or low molecular weight polymers of dimethylol urea or methylated dimethylol urea in an aqueous vehicle conducted in the presence of negatively-charged, carboxyl-substituted, linear aliphatic hydrocarbon polyelectrolyte system modifier material dissolved in the vehicle, is disclosed in U.S. Patents Nos. 4,001,140; 4,087,376; and 4,089,802.

A method of encapsulating by in situ polymerization, including a reaction between melamine and formaldehyde or polycondensation of monomeric or low molecular weight polymers of methylol melamine or etherified methylol melamine in an aqueous vehicle conducted in the presence of negatively-charged, carboxyl-substituted linear aliphatic hydrocarbon polyelectrolyte system modifier material dissolved in the vehicle, is disclosed in U.S. Patent No. 4,100,103.

The processes according to U.S. Patent Nos. 4,001,140; 4,087,376; 4,089,802; and 4,100,103 have been successfully used to encapsulate solutions of chromogenic materials for use in pressure-sensitive copying papers. Of the suitable carboxyl-substituted system modifiers disclosed in said patents, hydrolyzed maleic anhydride copolymers are preferred. Among the hydrolyzed maleic anhydride copolymers disclosed, the most preferred is poly(ethylene-co-maleic anhydride) (hereinafter referred to as EMA) because of the balance of properties provided to the encapsulation processes.

The cost of EMA, relative to other suitable system modifiers, has always been a premium, producing a consequent premium in the cost of the microcapsules manufactured by processes in which EMA constitutes the system modifier. Because of cost and availability considerations, poly(acrylic acid) (hereinafter referred to as PAA), is a logical substitute for EMA as the system modifier. While microcapsules made from processes according to U.S. Patent Nos. 4,001,140; 4,087,376; 4,089,802; and 4,100,103, in which PAA constitutes the system modifier, are of commercial quality for use in pressure-sensitive copying paper, they do not possess the optimum balance of properties obtained when EMA is utilized.

One function of the system modifier in the processes of said patents is to take an active part in the control or moderation of the polymerization reaction of the starting materials used to form the condensation polymer which makes up the resulting capsule walls.

Another function of the system modifier in the processes of said patents is to act as an emulsifying agent to promote and maintain the separation of the individual droplets of the intended capsule core material in the aqueous manufacturing vehicle.

When PAA is utilized as the system modifier, emulsification of the intended capsule core material requires more energy input and time and produces a poorer drop size distribution than when EMA is employed. The poorer emulsifying capability of PAA can be offset in the case of the process of U.S. Patent No. 4,100,103 by mixing in, prior to emulsification, the starting materials ( e.g. methylated methylol melamine) employed in the in situ polymerization reaction to form the condensation polymer which makes up the resulting capsule walls. The presence of methylated methylol melamine or a low molecular weight polymer thereof, (hereinafter referred to as MMM) during the intended core material emulsification step, can result in the premature polymerization of the MMM. This tendency of the MMM to prematurely react under these circumstances is reduced by raising the pH of the PAA-MMM solution to the highest level at which emulsification of the intended core material can be obtained. Once a satisfactory intended core material emulsion is obtained, the pH of the emulsion must be reduced in order to obtain the deposition of satisfactory capsule walls in a reasonable amount of time. This process may be further improved by the addition of certain salts as disclosed in U.S. patent No. 4,444,699. Also, the use of PAA as the system modifier in combination with polystyrene sulphonic acid or a salt thereof may be advamtageous if the polystyrene sulphonic acid is present in a certain range of relative amount as disclosed in U.S. Patent No. 4,490,313.

In order to overcome the above-decribed drawbacks of EMA and PAA, U.S. Patent No. 4,552,811 proposes the use of certain acrylic acid-alkyl acrylate copolymers as the system modifier in in situ polymerization encapsulation processes.

Nevertheless, there remains scope for improving microcapsule-manufacturing processes of the general kind discussed above by enhancing the properties of the microcapsules, as judged by the stringent property requirements mentioned above and/or by finding alternative advantageous system modifier materials, and such improvement is an object of the present invention.

It has now been learned that, when the processes of U.S. Patents Nos. 4,001,140; 4,087,376; 4,089,802; and 4,100,103 are practised using certain acrylic acid-alkyl methacrylate copolymers as system modifiers in place of the system modifiers explicitly disclosed in those four patents, unexpected benefits are produced over the teachings of the prior art. Improved emulsification and drop size distribution of intended capsule core material, substantially enhanced resistance of said emulsion to destabilization during the course of the encapsulation process and enhanced impermeability of the resulting microcapsules are amongst the benefits which can be obtained, compared to the results obtained from the use of PAA or a non-preferred copolymer.

The use of acrylic acid-alkyl methacrylate copolymers in encapsulation processes involving in situ polymerization of urea- or melamine-formaldehyde polymer precursor material is not in itself novel.

For example, a method of encapsulating by polymerizing urea and formaldehyde in the presence of gum arabic is disclosed in U.S. patent No. 4,221,710. This patent further discloses that anionic high molecular weight electrolytes can also be employed with the gum arabic. Examples of the anionic high molecular weight electrolytes include acrylic acid and methacrylic acid copolymers and under specific examples of acrylic acid and methacrylic acid copolymers are listed copolymers of alkyl methacrylates and acrylic acid including methyl methacrylate-acrylic acid and butyl methacrylate-acrylic acid copolymers.

A method for preparing microcapsules by polymerizing urea and formaldehyde in the presence of an anionic polyelectrolyte and an ammonium salt of an acid is disclosd in U.S. Patents Nos. 4,251,386 and 4,356,109. Examples of the anionic polyelectrolytes include copolymers of acrylic acid and methacrylic acid and under specific examples of acrylic acid and methacrylic acid copolymers are listed copolymers of alkyl methacrylates and acrylic acid including methyl methacrylate-acrylic acid and butyl methacrylate-acrylic acid copolymers.

A method for making microcapsules by the polycondensation of an anion-modified aminoaldehyde resin in the presence of an anionic colloid material is disclosed in U.S. Patent No. 4,328,119. Examples of anionic colloid material include copolymers of methacrylic acid ester and acrylic acid.

There is no explicit disclosure in any of the above cited U.S. Patents Nos. 4,221,710; 4,251.386; 4,328,119; or 4,356,109 regarding the use of propyl methacrylate-acrylic acid, amyl methacrylate-acrylic acid, hexyl methacrylate-acrylic acid or cyclohexyl methacrylate-arylic acid copolymers. Of the specific alkyl methacrylate-acrylic acid polymers referred to in those patents, no meaningful specific proportion of alkyl methacrylate is disclosed and in particular there is no disclosure of the proportion of butyl methacrylate in the disclosed butyl methacrylate-acrylic acid copolymers. Furthermore, there is no awareness nor appreciation of the criticality of a certain percentage range of alkyl methacrylate content in the copolymers when such copolymers are used as system modifier material in encapsulation processes.

The EP-A 219 619 being prior art in the meaning of art. 54 (3) and (4) describes a microencapsulation process which comprises polycondensating a hydrophilic melamine-formaldehyde resin type precondensate in water or in a hydrophilic medium containing an emulsifier to form a capsule wall film around a hydrophobic core material to obtain microcapsules, said emulsifier being a copolymer of (1) an unsaturated monobasic acid monomer of at least 80 mole%, (2) a hydrophilic monomer other than a carboxylic acid and (3) a hydrophobic monomer, e.g. butyl methacrylate in an amount of 3 or 5 mole%.

According to the invention, there is provided a process for manufacturing microcapsules comprising the steps of:

(a) establishing a dispersion of particles or droplets of a substantially insoluble capsule core material in an aqueous manufacturing vehicle containing:
(i) a capsule wall precursor material selected from melamine and formaldehyde; monomeric or low molecular weight polymers of methylol melamine or methylated methylol melamine; urea and formaldehyde; monomeric or low molecular weight polymers of dimethylol urea or methylated dimethylol urea; or any combination of the foregoing; and

(ii) an acrylic acid-alkyl methacrylate copolymer; and
(b) forming polymeric shells individually surrounding the particles of capsule core material from the capsule wall precursor material by in situ polymerisation;

characterised in that the acrylic acid-alkyl methacrylate copolymer is present in an amount of 0.4 to 15% by weight of the aqueous manufacturing vehicle and comprises:
an acrylic acid-propyl methacrylate copolymer containing 1 to 20% by weight propyl methacrylate;
an acrylic acid-butyl methacrylate copolymer containing 0.5 to 20% by weight butyl methacrylate;
an acrylic-acid amyl methacrylate copolymer containing 0.5 to 15% by weight amyl methacrylate;
an acrylic acid-hexyl methacrylate copolymer containing 0.5 to 10% by weight hexyl methacrylate; or
an acrylic acid-cyclohexyl methacrylate copolymer containing 0.5 to 10% by weight cyclohexyl methacrylate. Of the acrylic acid-alkyl methacrylate copolymers just referred to, acrylic acid-butyl methacrylate copolymers containing 1 to 6% by weight, more preferably 1 to 2% by weight, and even more preferably 2% by weight butyl methacrylate, are preferred.

The invention also extends to microcapsules when produced by a process as just defined, and to pressure-sensitive copying material carrying such microcapsules.

The above-specified proportions of alkyl methacrylate in the copolymers were arrived at on the basis that these proportions give rise to unexpected benefits when judged by one or more of the following selection criteria:

(1) Ability to prepare an emulsion of intended capsule core material of acceptable drop size distribution;
(2) Resistance of said emulsion to destabilization during addition of the starting materials for capsule wall formation;
(3) Resistance of said emulsion to destabilization during the course of the encapsulation process; and
(4) Impermeability of the resulting microcapsules.

The system modifier may be a copolymer of acrylic acid and a mixture of more than one alkyl methacrylate.

The capsule wall precursor materials used to form the condensation polymer which makes up the resulting capsule walls may be as described in U.S. Patent Nos. 4,001,140; 4,087,376; 4,089,802; and 4,100,103. Similarly, the microencapsulation procedures described in those patents may be used in practising the present process.

The present process is operable over a wide range of temperatures but a temperature range of 40°C to 95°C is preferred. More preferred is the temperature range of 50°C to 70°C.

Under certain circumstances the inclusion of one of the salts disclosed in U.S. Patent No. 4,444,699 provides a further improvement in the viscosity of the resulting microcapsule slurry. However, the use of such salts is not essential for practising and obtaining the beneficial properties of the present invention.

The invention will now be illustrated by the following examples in which:-

(1) All parts and percentages are by weight, unless specified otherwise.
(2) All solutions, unless otherwise designated, are aqueous solutions.
(3) The intended capsule core material in all cases was a solution of chromogenic compounds as listed in Table 1 below in a mixture of 65 parts of a $C_{10} - C_{13}$ alkylbenzene and 35 parts of benzylated xylenes (U.S. Patent No. 4,130,299):

Table 1

| Concentration | Chromogenic Material |
|---|---|
| 1.7% | 3,3-bis(p-dimethylaminophenyl)-6-dimethylaminophthalide |
| 0.55% | 2′-anilino-3′-methyl-6′-diethylaminofluoran |
| 0.55% | 3,3-bis(1-ethyl-2-methylindol-3-yl)phthalide |

Examples 1-28 and 34

In each of Examples 1-28 and 34, the following general procedure was used. Into 153 g of a mixture of 149.5 g water and 3.5 g alkyl methacrylate-acrylic acid copolymer, adjusted to about pH 4.7, were emulsified 180 g of intended capsule core material. A second mixture of 6.5 g of the same copolymer and 65.0 g water was prepared and adjusted to about pH 4.0 and 20 g of a partially methylated methylol melamine resin solution ("Resimene 714", 80% solids, Monsanto Company, St. Louis, Missouri) were added and this mixture was in turn added with stirring to the above-described emulsion. The resulting mixture was placed in a container which was mounted in a room temperature water bath, continuous stirring was provided, 4.5 g sodium sulphate and 9 g 37% formaldhehyde were added, the bath was heated to 65°C and maintained at that temperature for about 21 hours to initiate and complete encapsulation.

For each of the above-described Examples, the particle size was measured after emulsification, after addition of the mixture of the partially methylated methylol melamine resin solution and additional copolymer and after completion of the encapsulation process. The particle size measurements were made both in a Microtrac Particle Size Analyser (manufactured by Leeds and Northrup Instruments, St. Petersburg, Florida), and visually by means of a microscope. Both means were employed because, even though the Particle Size Analyzer is very good at providing reliable particle size data for small sizes, it can fail to detect very large droplets which can be easily detected by means of a microscope.

Listed in Table 2 are Examples 1-28 and 34 and the corresponding type of acrylic acid-alkyl methacrylate copolymer (i.e. the nature of the alkyl group) and the weight percent of the respective alkyl methacrylate in the copolymer.

Table 2

| Example No. | Nature of alkyl group of copolymer | % of alkyl methacrylate in copolymer |
|---|---|---|
| 1 | methyl | 15.0 |
| 2 | ethyl | 10.0 |
| 3 | ethyl | 12.0 |
| 4 | propyl | 0.50 |
| 5 | propyl | 4.0 |
| 6 | propyl | 20.0 |
| 7 | butyl | 0.25 |
| 8 | butyl | 0.50 |
| 9 | butyl | 1.0 |
| 10 | butyl | 2.0 |
| 11 | butyl | 4.0 |
| 12 | butyl | 6.0 |
| 13 | butyl | 8.0 |
| 14 | butyl | 10.0 |
| 15 | butyl | 15.0 |
| 16 | butyl | 20.0 |
| 17 | butyl | 25.0 |
| 18 | amyl | 0.50 |
| 19 | amyl | 2.0 |
| 20 | amyl | 15.0 |
| 21 | hexyl | 0.5 |
| 22 | hexyl | 2.0 |
| 23 | hexyl | 10.0 |
| 24 | cyclohexyl | 0.5 |
| 25 | cyclohexyl | 2.0 |
| 26 | cyclohexyl | 10.0 |
| 27 | 2-ethylhexyl | 2.0 |
| 28 | dodecyl | 2.0 |
| 34 | propyl | 1.0 |

In Table 3 below are listed the performance results of Examples 1-28 and 34 as determined by the previously-described particle size measurements. From these results, copolymers affording benefits and the weight percent range for each such copolymer can be determined.

Table 3

| Percent by Weight of Alkyl Methacrylate in Copolymer | | | | | | | | | | | | |
|---|---|---|---|---|---|---|---|---|---|---|---|---|
| | 0.25 | 0.5 | 1 | 2 | 4 | 6 | 8 | 10 | 12 | 15 | 20 | 25 |
| **Alkyl Group** | | | | | | | | | | | | |
| Methyl | | | | | | | | | | 0 | | |
| Ethyl | | | | | | | | 0 | 0 | | | |
| Propyl | | # | + | | + | | | | | + | | |
| Butyl | # | + | + | + | + | + | + | + | | + | + | # |
| Amyl | | + | | + | | | | | | + | | |
| Hexyl | | + | | + | | | | + | | | | |
| Cyclohexyl | | + | | + | | | | + | | | | |
| 2-ethylhexyl | | | | # | | | | | | | | |
| Dodecyl | | | | # | | | | | | | | |

Key:
0 – Unacceptable emulsion
+ – Acceptable emulsion and acceptable encapsulation
# – Acceptable emulsion, but unacceptable size change during addition of partially methylated methylol melamine resin solution and/or during encapsulation

Microcapsules from certain of Examples 1-28 and 34 were individually mixed with ethoxylated corn starch binder and uncooked wheat starch granules according to the dry proportions listed below and sufficient water was added to make a 20% solids dispersion.

| Parts, Dry | Material |
|---|---|
| 50 | capsules |
| 5 | ethoxylated corn starch |
| 12.5 | wheat starch granules |

The dispersion was coated on a 50 gm$^{-2}$ paper base with No. 12 wire-wound coating rod and dried. The resulting CB sheets were each tested in a Typewriter Intensity (TI) test and Oven Decline test as described below.

For the TI test, a CF sheet bearing a coating comprising an oil-soluble metal salt of a phenol-formaldehyde novolak resin, made by procedures described in U.S. Patent Nos. 3,732,120 and 3,455,721, was employed. In the TI test an upper-case "X" character pattern is typed on a coated side-to-side CB-CF pair. After the image has been allowed to develop for twenty minutes, the intensity is measured by a reflectance method. The reflectance of the typed area is a measure of colour development on the CF sheet and is reported as the ratio ($I/I_0$ of the reflectance of the typed area ($I$) to that of the background reflectance of the CF paper ($I_0$), expressed as a percentage. A high value indicates a little colour development and a low value indicates good colour development. A value of about 60 or less is considered very acceptable.

A related test concerning capsule quality is the degree of loss of ability of capsule-coated paper to produce transfer prints in a typewriter test after storage of the coated paper in an oven at a specified temperature for a specified time (Oven Decline Test). It is useful to perform a TI test with a CB/CF couplet, placing the CB in a 100°C oven for 24 hours and then reimaging the couplet after storage. A TI value difference between initial and aged samples of about 5 or less is acceptable for these tests.

As evidenced by the data in Table 4 below, all of the CB sheets tested demonstrate good capsule quality through the retention of the ability of the CB sheets to produce a good TI image intensity after oven storage.

Table 4

| Ex. No. | % of alkyl methacry-late in copolymer | Nature of alkyl group of copolymer | Typewriter Intensity | |
|---------|---------------------------------------|-----------------------------------|----------------------|---|
| | | | Before Oven Storage | After Oven Storage |
| 4 | 0.5 | propyl | 55 | 57 |
| 34 | 1.0 | propyl | 57 | 58 |
| 5 | 4.0 | propyl | 54 | 56 |
| 6 | 20.0 | propyl | 55 | 59 |
| 7 | 0.25 | butyl | 55 | 56 |
| 8 | 0.5 | butyl | 53 | 56 |
| 9 | 1.0 | butyl | 55 | 55 |
| 10 | 2.0 | butyl | 56 | 57 |
| 11 | 4.0 | butyl | 55 | 57 |
| 12 | 6.0 | butyl | 54 | 56 |
| 13 | 8.0 | butyl | 55 | 58 |
| 14 | 10.0 | butyl | 54 | 56 |
| 15 | 15.0 | butyl | 54 | 57 |
| 16 | 20.0 | butyl | 55 | 57 |
| 17 | 25.0 | butyl | 56 | 61 |
| 18 | 0.5 | amyl | 56 | 56 |
| 19 | 2.0 | amyl | 52 | 56 |
| 20 | 15.0 | amyl | 55 | 58 |
| 21 | 0.5 | hexyl | 54 | 55 |
| 22 | 2.0 | hexyl | 55 | 58 |
| 23 | 10.0 | hexyl | 55 | 58 |
| 24 | 0.5 | cyclohexyl | 55 | 56 |
| 25 | 2.0 | cyclohexyl | 55 | 58 |
| 26 | 10.0 | cyclohexyl | 55 | 59 |

Examples 29-33

In Examples 29-33, a series of encapsulation experiments, similar to Examples 1-28, was performed except that a different capsule wall formation process was utilized. In each of Examples 29-33, the following general procedure was used. Into a mixture of 89.5 g water, 5 g urea, 0.5 g resorcinol and 5 g of alkyl methacrylate-acrylic acid copolymer, adjusted to pH 4.0, were emulsified 90 g of the intended capsule core material. After emulsification, the resulting mixture was placed in a container which was mounted in a room temperature water bath, continuous stirring was provided, 13 g of 37% formaldehyde solution were added and the bath was heated to 65°C and maintained at that temperature for about nine hours to initiate and complete encapsulation.

The resulting capsule batches, which were all found to be successful in particle size determination tests, were formulated into CB sheets as previously described (supra) and these CB sheets were utilized in Typewriter Intensity and Oven Decline tests as previously described (supra). The results of the TI and Oven Decline tests are set out in Table 5.

7

Table 5

| Ex. No. | % of alkyl methacry-late in copolymer | Nature of alkyl group of copolymer | Typewriter Intensity | |
|---|---|---|---|---|
| | | | Before Oven Storage | After Oven Storage |
| 29 | 6 | propyl | 56 | 56 |
| 30 | 4 | butyl | 58 | 57 |
| 31 | 2 | amyl | 56 | 57 |
| 32 | 2 | hexyl | 56 | 56 |
| 33 | 2 | cyclohexyl | 56 | 56 |

The results of the Typewriter Intensity and Oven Storage tests provide further evidence of the efficacy of various alkyl methacrylate-acrylic acid copolymers when employed in a process for preparing microcapsules wherein the polymeric shells are produced by in situ polymerization of urea and formaldehyde.

## Claims for the Contracting States: FR, IT, NL, SE, CH, LI, BE, AT, ES

1. A process for manufacturing microcapsules comprising the steps of:
(a) establishing a dispersion of particles or droplets of a substantially insoluble capsule core material in an aqueous manufacturing vehicle containing:
(i) a capsule wall precursor material selected from melamine and formaldehyde; monomeric or low molecular weight polymers of methylol melamine or methylated methylol melamine; urea and formaldehyde; monomeric or low molecular weight polymers of dimethylol urea or methylated dimethylol urea; or any combination of the foregoing; and
(ii) an acrylic acid-alkyl methacrylate copolymer; and
(b) forming polymeric shells individually surrounding the particles of capsule core material from the capsule wall precursor material by in situ polymerisation;
characterised in that the acrylic acid-alkyl methacrylate copolymer is present in an amount of 0.4 to 15% by weight of the aqueous manufacturing vehicle and comprises:
an acrylic acid-propyl methacrylate copolymer containing 1 to 20% by weight propyl methacrylate;
an acrylic acid-butyl methacrylate copolymer containing 0.5 to 20% by weight butyl methacrylate;
an acrylic-acid amyl methacrylate copolymer containing 0.5 to 15% by weight amyl methacrylate;
an acrylic acid-hexyl methacrylate copolymer containing 0.5 to 10% by weight hexyl methacrylate; or
an acrylic acid-cyclohexyl methacrylate copolymer containing y 0.5 to 10% by weight cyclohexyl methacrylate.

2. A process as claimed in claim 1, wherein the polymerization is conducted at a temperature of 40°C to 95°C.

3. A process as claimed in claim 2 wherein the polymerization is conducted at a temperature of 50°C to 70°C.

4. A process as claimed in any preceding claim, wherein said copolymer contains about 1 to about 6 weight percent butyl methacrylate.

5. A process as claimed in claim 4 wherein said copolymer contains about 1 to about 2 weight percent butyl methyacrylate.

6. A process as claimed in claim 5 wherein said copolymer contains about 2 weight percent butyl methacrylate.

7. Microcapsules produced by a process as claimed in any preceding claim.

8. A sheet material carrying microcapsules as claimed in claim 7.

## Claims for the Contracting States: DE, GB

1. A process for manufacturing microcapsules comprising the steps of:
(a) establishing a dispersion of particles or droplets of a substantially insoluble capsule core material in an aqueous manufacturing vehicle containing:
(i) a capsule wall precursor material selected from melamine and formaldehyde; monomeric or low molecular weight polymers of methylol melamine or methylated methylol melamine; urea and formaldehyde; monomeric or low molecular weight polymers of dimethylol urea or methylated dimethylol urea; or any combination of the foregoing; and
(ii) an acrylic acid-alkyl methacrylate copolymer; and
(b) forming polymeric shells individually surrounding the particles of capsule core material from the capsule wall precursor material by in situ polymerisation;

characterised in that the acrylic acid-alkyl methacrylate copolymer is present in an amount of 0.4 to 15% by weight of the aqueous manufacturing vehicle and comprises:
an acrylic acid-propyl methacrylate copolymer containing 1 to 20% by weight propyl methacrylate;
an acrylic acid-butyl methacrylate copolymer containing 0.5 to 4% by weight butyl methacrylate;
an acrylic-acid amyl methacrylate copolymer containing 0.5 to 15% by weight amyl methacrylate;
an acrylic acid-hexyl methacrylate copolymer containing 0.5 to 10% by weight hexyl methacrylate; or
an acrylic acid-cyclohexyl methacrylate copolymer containing y 0.5 to 10% by weight cyclohexyl methacrylate.

2. A process as claimed in claim 1, wherein the polymerization is conducted at a temperature of 40°C to 95°C.

3. A process as claimed in claim 2 wherein the polymerization is conducted at a temperature of 50°C to 70°C.

4. A process as claimed in any preceeding claim wherein said copolymer contains 1 to 2 weight percent butyl methyacrylate.

5. A process as claimed in claim 4 wherein said copolymer contains about 2 weight percent butyl methacrylate.

6. Microcapsules produced by a process as claimed in any preceding claim.

7. A sheet material carrying microcapsules as claimed in claim 6.

**Patentansprüche für die Vertragsstaaten: FR, IT, NL, SE, CH, LI, BE, AT, ES**

1. Verfahren zur Herstellung von Mikrokapseln, umfassend die Schritte:
a) Einführen einer Teilchen- oder Tröpfchendispersion eines im wesentlichen unlöslichen Kapselkernmaterials in eine wäßrige Fertigungshilfsmittellösung, enthaltend:
i) ein Kapselwand-Vorläufermaterial, ausgewählt aus Melamin und Formaldehyd, Methylolmelamin oder methyliertem Methylolmelamin in Form von Monomeren oder niedermolekularen Polymeren, Harnstoff und Formaldehyd, Dimethylolharnstoff oder methyliertem Dimethylolharnstoff in Form von Monomeren oder niedermolekularen Polymeren, oder jeder Kombination der zuvor genannten Substanzen und
ii) ein Acrylsäure-Alkylmethacrylat Copolymer und
b) Bildung von Polymerhüllen durch in situ Polymerisation aus dem Kapselwandvorläufermaterial, die jeweils einzelne Teilchen von Kapselkernmaterial umgeben,
dadurch gekennzeichnet, daß das Acrylsäure-Alkylmethacrylat Copolymer in einer Menge von 0,4 bis 15 Gew.-% der wäßrigen Fertigungshilfsmittellösung vorliegt und ein Acrylsäure-Propylmethacrylat Copolymer mit 1 bis 20 Gew.-% Propylmethacrylat, ein Acrylsäure-Butylmethacrylat Copolymer mit 0,5 bis 20 Gew.-% Butylmethacrylat, ein Acrylsäure-Amylmethacrylat Copolymer mit 0,5 bis 15 Gew.-% Amylmethacrylat, ein Acrylsäure-Hexylmethacrylat Copolymer mit 0,5 bis 10 Gew.-% Hexylmethacrylat oder ein Acrylsäure-Cyclohexylmethacrylat Copolymer mit 0,5 bis 10 Gew.-% Cyclohexylmethacrylat enthält.

2. Verfahren nach Anspruch 1, worin die Polymerisation bei einer Temperatur von 40°C bis 95°C durchgeführt wird.

3. Verfahren nach Anspruch 2, worin die Polymerisation bei einer Temperatur von 50°C bis 70°C durchgeführt wird.

4. Verfahren nach einem der vorhergehenden Ansprüche worin das Copolymer ungefähr 1 bis ungefähr 6 Gew.-% Butylmethacrylat enthält.

5. Verfahren nach Anspruch 4, worin das Copolymer ungefähr 1 bis ungefähr 2 Gew.-% Butylmethacrylat enthält.

6. Verfahren nach Anspruch 5, worin das Copolymer ungefähr 2 Gew.-% Butylmethacrylat enthält.

7. Mikrokapseln, hergestellt durch ein Verfahren nach einem der vorhergehenden Ansprüche.

8. Blattmaterial, das Mikrokapseln nach Anspruch 7 trägt.

**Patentansprüche für die Vertragsstaaten: DE, GB**

1. Verfahren zur Herstellung von Mikrokapseln, umfassend die Schritte:
a) Einführen einer Teilchen- oder Tröpfchendispersion eines im wesentlichen unlöslichen Kapselkernmaterials in eine wäßrige Fertigungshilfsmittellösung, enthaltend:
i) ein Kapselwand-Vorläufermaterial, ausgewählt aus Melamin und Formaldehyd, Methylolmelamin oder methyliertem Methylolmelamin in Form von Monomeren oder niedermolekularen Polymeren, Harnstoff und Formaldehyd, Dimethylolharnstoff oder methyliertem Dimethylolharnstoff in Form von Monomeren oder niedermolekularen Polymeren, oder jeder Kombination der zuvor genannten Substanzen und
ii) ein Acrylsäure-Alkylmethacrylat Copolymer und
b) Bildung von Polymerhüllen durch in situ Polymerisation aus dem Kapselwand-Vorläufermaterial, die jeweils einzelne Teilchen von Kapselkernmaterial umgeben,
dadurch gekennzeichnet, daß das Acrylsäure-Alkylmethacrylat Copolymer in einer Menge von 0,4 bis 15 Gew.-% der wäßrigen Fertigungshilfsmittellösung vorliegt und ein Acrylsäure-Propylmethacrylat Copolymer mit 1 bis 20 Gew.-% Propylmethacrylat, ein Acrylsäure-Butylmethacrylat Copolymer mit 0,5 bis 4 Gew.-% Butylmethacrylat, ein Acrylsäure-Amylmethacrylat Copolymer mit 0,5 bis 15 Gew.-% Amylmethacrylat, ein Acrylsäure-Hexylmethacrylat Copolymer mit 0,5 bis 10 Gew.-% Hexylmethacrylat oder ein Acrylsäure-Cyclohexylmethacrylat Copolymer mit 0,5 bis 10 Gew.-% Cyclohexylmethacrylat enthält.

2. Verfahren nach Anspruch 1, worin die Polymerisation bei einer Temperatur von 40°C bis 95°C durchgeführt wird.

3. Verfahren nach Anspruch 2, worin die Polymerisation bei einer Temperatur von 50°C bis 70°C durchgeführt wird.

4. Verfahren nach einem der vorhergehenden Ansprüche worin das Copolymer ungefähr 1 bis ungefähr 2 Gew.-% Butylmethacrylat enthält.

5. Verfahren nach Anspruch 4, worin das Copolymer ungefähr 2 Gew.-% Butylmethacrylat enthält.

6. Mikrokapseln, hergestellt durch ein Verfahren nach einem der vorhergehenden Ansprüche.

7. Blattmaterial, das Mikrokapseln nach Anspruch 6 trägt.

## Revendications pour les Etats Contractants: FR, IT, NL, SE, CH, LI, BE, AT, ES

1. Procédé pour préparer des microcapsules comprenant les étapes consistant à:

a) établir une dispersion de particules ou de gouttelettes d'une matière de noyau de capsule essentiellement insoluble, dans un véhicule aqueux de fabrication contenant:

i) un précurseur de paroi de capsule choisi parmi la mélamine et le formaldéhyde; la méthylolmélamine ou la éthylolmélamine méthylée ou leurs polymères de bas poids moléculaire; l'urée et le formaldéhyde; la diméthylolurée ou la diméthylolurée méthylée ou leurs polymères de bas poids moléculaire; ou une combinaison quelconque des précédents; et

ii) un copolymère d'acide acrylique-méthacrylate d'alkyle; et

b) former des enveloppes polymères entourant individuellement les particules d'une matière de noyau des capsules à partir du précurseur de paroi de capsule par polymérisation in situ;

caractérisé en ce que le copolymère d'acide acrylique-méthacrylate d'alkyle est présent en une proportion de 0,4 a 15% du poids du véhicule aqueux de fabrication et comprend:

un copolymère d'acide acrylique-méthacrylate de propyle contenant 1 à 20% en poids de méthacrylate de propyle;

un copolymère d'acide acrylique-méthacrylate de butyle contenant 0,5 à 10% en poids de méthacrylate de butyle;

un copolymère d'acide acrylique-méthacrylate d'amyle contenant 0,5 à 15% en poids de méthacrylate d'amyle;

un copolymère d'acide acrylique-méthacrylate d'hexyle contenant 0,5 à 10% en poids de méthacrylate d'hexyle; ou

un copolymère d'acide acrylique-méthacrylate de cyclohexyle contenant 0,5 à 10% en poids de méthacrylate de cyclohexyle.

2. Procédé selon la revendication 1, dans lequel la polymérisation est effectuée à une température de 40°C à 95°C.

3. Procédé selon la revendication 2, dans lequel la polymérisation est effectuée à une température de 50°C à 70°C.

4. Procédé selon l'une quelconque des revendications précédentes, dans lequel ledit copolymère contient environ 1 à environ 6% en poids de méthacrylate de butyle.

5. Procédé selon la revendication 4, dans lequel ledit copolymère contient environ 1 à environ 2% en poids de méthacrylate de butyle.

6. Procédé selon la revendication 5, dans lequel ledit copolymère contient environ 2% en poids de méthacrylate de butyle.

7. Microcapsules produites selon un procédé selon l'une quelconque des revendications précédentes.

8. Feuille portant des microcapsules selon la revendication 7.

## Revendications pour les Etats Contractants: DE, GB

1. Procédé pour préparer des microcapsules comprenant les étapes consistant à:

a) établir une dispersion de particules ou de gouttelettes d'une matière de noyau de capsule essentiellement insoluble, dans un véhicule aqueux de fabrication contenant:

i) un précurseur de paroi de capsule choisi parmi la mélamine et le formaldéhyde: la méthylolmélamine ou la méthylolmélamine méthylée ou leurs polymères de bas poids moléculaire; l'urée et le formaldéhyde; la diméthylolurée ou la diméthylolurée méthylée ou leurs polymères de bas poids moléculaire; ou une combinaison quelconque des précédents; et

ii) un copolymère d'acide acrylique-méthacrylate d'alkyle; et

b) former des enveloppes polymères entourant individuellement les particules d'une matière de noyau des capsules à partir du précurseur de paroi de capsule par polymérisation in situ;

caractérisé en ce que le copolymère d'acide acrylique-méthacrylate d'alkyle est présent en une proportion de 0,4 à 15% du poids du véhicule aqueux de fabrication et comprend:

un copolymère d'acide acrylique-méthacrylate de propyle contenant 1 à 20% en poids de méthacrylate de propyle;

un copolymère d'acide acrylique-méthacrylate de butyle contenant 0,5 à 4% en poids de méthacrylate de butyle;

un copolymère d'acide acrylique-méthacrylate d'amyle contenant 0,5 à 15% en poids de méthacrylate d'amyle;

un copolymère d'acide acrylique-méthacrylate d'hexyle contenant 0,5 à 10% en poids de méthacrylate d'hexyle; ou

un copolymère d'acide acrylique-méthacrylate de cyclohexyle contenant 0,5 à 10% en poids de méthacrylate de cyclohexyle.

2. Procédé selon la revendication 1, dans lequel la polymérisation est effectuée à une température de 40°C à 95°C.

3. Procédé selon la revendication 2, dans lequel la polymérisation est effectuée à une température de 50°C à 70°C.

4. Procédé selon l'une quelconque des revendications précédentes, dans lequel ledit copolymère contient environ 1 à environ 2% en poids de méthacrylate de butyle.

5. Procédé selon la revendication 4, dans lequel ledit copolymère contient environ 2% en poids de méthacrylate de butyle.

6. Microcapsules produites selon un procédé selon l'une quelconque des revendications précédentes.

7. Feuille portant des microcapsules selon la revendication 6.